# EUROPÄISCHE PATENTANMELDUNG

(11) **EP 3 045 484 A1**
(43) Veröffentlichungstag der Anmeldung: **20.07.2016**
(21) Anmeldenummer: 15151609.3
(22) Anmeldetag: 19.01.2015
(51) Int. Cl.: C08G 18/48, C08G 18/66, C08G 18/67, C08G 18/75, C08G 18/08, C08G 18/12, C08G 18/24, C08G 18/38, C08G 18/42

(54) **Stabilisierte Polyurethan-Silan-Dispersionen**

(71) Anmelder: Henkel AG & Co. KGaA, 40589 Düsseldorf (DE); Max-Planck-Gesellschaft zur Förderung der Wissenschaften e.V., 80539 München (DE)
(72) Erfinder: Taden, Andreas, 40597 Düsseldorf (DE); Landfester, Katharina, 55122 Mainz (DE); Keller, Hannes, 40227 Düsseldorf (DE)

(57) **Zusammenfassung**

Die vorliegende Erfindung betrifft wässrige Polyurethan-Silan-Hybrid-Dispersionen, in denen das Polyurethan-Silan-Hybridpolymer in Form einer stabilen Miniemulsion vorliegt. Die Dispersionen werden mittels eines Verfahrens hergestellt, das umfasst (i) Herstellen eines Vinylfunktionalisierten Polyurethan-Präpolymers durch Umsetzen von Polyolen und mindestens einem organischen Polyisocyanat, vorzugsweise in Gegenwart eines geeigneten Katalysators, wobei die Polyole umfassen: mindestens ein Polyol, das mindestens eine ionische oder potentiell ionische hydrophile Gruppe aufweist; mindestens ein nichtionisches Polyol; und mindestens ein Vinylfunktionalisiertes Polyol; (ii) Mischen des Polyurethan-Präpolymers aus Schritt (i) mit mindestens einem Vinylgruppen-haltigen Silan um eine homogene Polyurethan-Präpolymer/Silan-Mischung zu ergeben; (iii) Dispergieren der homogenen Polyurethan-Präpolymer/Silan-Mischung in eine kontinuierliche wässrige Phase derart, dass eine stabile Miniemulsion der Polyurethan-Präpolymer/Silan-Mischung in der wässrigen Phase gebildet wird; und (iv) Polymerisieren der Vinylgruppen des Polyurethan-Präpolymers und des Silans, um die wässrige Polyurethan-Silan-Hybrid-Dispersion zu ergeben. Die so erhältlichen Polyurethan-Silan-Hybrid-Dispersionen haben vielfältige Anwendungsbereiche, wie zum Beispiel Klebstoffe und Beschichtungsmittel, aber auch Waschmittel und Kosmetika.

## Beschreibung

Die vorliegende Erfindung betrifft wässrige Polyurethan-Silan-Hybrid-Dispersionen. Die Polyurethan-Silan-Hybridpartikel werden durch eine Kombination von ionischen und nichtionischen Gruppen, die während der Polymerisation direkt in das Polyurethan eingebaut werden, stabilisiert. Die Dispersionen werden durch Homogenisierung einer Mischung eines Vinyl-funktionalisierten Polyurethan-Präpolymers und eines Vinylgruppen-haltigen Silans und optional weiterer Vinylmonomere mittels eines Hochscherprozesses in Wasser, um eine Miniemulsion herzustellen, und anschließende Polymerisierung der Vinylgruppen sowie optional Kettenverlängerung des Präpolymers hergestellt. Die so erhältlichen Polyurethan-Silan-Hybrid-Dispersionen haben vielfältige Anwendungsbereiche, wie zum Beispiel Klebstoffe und Beschichtungsmittel.

Polyurethane (PUs) und Silane werden in großem Maßstab für eine Reihe von kommerziellen Anwendungen hergestellt, wie zum Beispiel Klebstoffe und Beschichtungen. Dabei werden Silane beispielsweise als Zusatzstoffe eingesetzt, um die Klebkraft und Benetzungseigenschaften von PU-basierten Klebstoffen zu verbessern. Die Kombination beider Materialien in Form von Hybridmaterialien ist für viele Anwendungsgebiete sehr interessant und es wurden bereits Anstrengungen unternommen entsprechende Hybridmaterialien zu entwickeln.

Es besteht daher Bedarf an stabilen Polyurethan-Silan-Hybrid-Systemen, insbesondere an solchen die Polyurethan-Silan-Hybrid-Partikel stabil in einer wässrigen Phase dispergieren können und dabei Partikel mit den gewünschten physikalischen und/oder mechanischen Eigenschaften bereitstellen.

Die vorliegende Erfindung basiert dabei auf der Erkenntnis der Erfinder, dass sich derartige Dispersionen durch eine spezielle Auswahl der zur Herstellung der Polyurethane-Silan-Hybridmaterialien verwendeten Polyole in Kombination mit bestimmten Homogenisierungsverfahren realisieren lassen.

In einem ersten Aspekt richtet sich die vorliegende Erfindung daher auf ein Verfahren zur Herstellung einer wässrigen Polyurethan-Silan-Hybrid-Dispersion, dadurch gekennzeichnet, dass das Verfahren umfasst:
(i) Herstellen eines Vinyl-funktionalisierten Polyurethan-Präpolymers durch Umsetzen von Polyolen und mindestens einem organischen Polyisocyanat, vorzugsweise in Gegenwart eines geeigneten Katalysators, wobei die Polyole umfassen:
   (A) mindestens ein Polyol, vorzugsweise ein Polyetherpoyol, das mindestens eine ionische oder potentiell ionische hydrophile Gruppe aufweist;
   (B) mindestens ein nichtionisches Polyol, insbesondere ein nichtionisches hydrophiles Polyetherpolyol; und
   (C) mindestens ein Vinyl-funktionalisiertes Polyol, insbesondere ein Allyl-funktionalisiertes Polyol;
   wobei die Polyole in Form einer Polyolmischung umfassend die Polyole (A)-(C) mit dem mindestens einen organischen Polyisocyanat umgesetzt werden, wobei das mindestens eine organische Polyisocyanat in einem molaren Überschuss bezogen auf die Hydroxylgruppen der Polyole eingesetzt wird, um ein NCO-terminiertes Vinyl-funktionalisiertes Polyurethan-Präpolymer zu erhalten;
(ii) Mischen des Polyurethan-Präpolymers aus Schritt (i) mit mindestens einem Vinylgruppen-haltigen Silan um eine Polyurethan-Präpolymer/Silan-Mischung zu ergeben;
(iii) Dispergieren der homogenen Polyurethan-Präpolymer/Silan-Mischung in eine kontinuierliche wässrige Phase derart, dass eine stabile Miniemulsion der Polyurethan-Präpolymer/Silan-Mischung in der wässrigen Phase gebildet wird; und
(iv) Polymerisieren der Vinylgruppen-haltigen Silane und der Vinylgruppen des Polyurethan-Präpolymers, um die wässrige Polyurethan-Silan-Hybrid-Dispersion zu ergeben.

In weiteren Aspekten richtet sich die Erfindung auf die derart erhältlichen Polyurethan-Silan-Hybrid-Dispersionen.

Noch weitere Aspekte der Erfindung betreffen Zusammensetzungen, die die hierin beschriebenen Polyurethan-Silan-Hybrid-Dispersionen enthalten, insbesondere Klebstoffzusammensetzungen oder Beschichtungsmittelzusammensetzungen.

Schließlich richtet sich die Erfindung auch auf die Verwendung einer Polyurethan-Silan-Hybrid-Dispersion, wie sie mittels der hierin beschriebenen Verfahren erhältlich ist, als Klebstoff, Beschichtungsmittel oder Rheologie-Modifikator.

Die vorliegende Erfindung richtet sich auf Miniemulsionsverfahren zur Herstellung stabiler Polyurethan-Silan-Hybrid-Dispersionen, wobei das Verfahren bestimmte Mengen an Vinylfunktionellen, ionischen und nichtionischen Gruppen verwendet, die während der Polymerisation in die Polyurethan-Präpolymere eingebaut werden. Überraschenderweise haben die Erfinder gefunden, dass die Verwendung der hierin beschriebenen speziellen Polyole in Kombination mit den beschriebenen Miniemulsions-Verfahren es erlaubt, stabile Hybridpartikel, optional mit Core-Shell-Morphologie, herzustellen. Ferner sind die beschriebenen Verfahren dazu geeignet, Polyurethan(hybrid)polymere, die zur Kristallbildung neigende Gruppen oder Einheiten enthalten, in wässrigen Dispersionen zu stabilisieren. Schließlich erlauben es die beschriebenen Verfahren auch, auf die Verwendung von Lösungsmitteln zur Lösung/Emulgierung der Präpolymere vor der Homogenisierung zu verzichten, da anstelle eines Lösungsmittels Vinylgruppen-haltige Silane und/oder Vinylmonomere verwendet werden, die anschließend copolymerisiert werden.

In verschiedenen Ausführungsformen der hierin beschriebenen Verfahren werden die Polyurethan-Präpolymere aus einer Mischung von Polyolen, die die gewünschten Eigenschaften aufweisen, und geeigneten Polyisocyanaten, insbesondere Diisocyanaten, die die Polyole miteinander verknüpfen synthetisiert. Es ist für den Fachmann selbstverständlich, dass dieser Ansatz auch umgekehrt durchgeführt werden kann, d.h. eine Mischung von Polyisocyanaten mit den gewünschten Eigenschaften mit entsprechenden Polyolen/Diolen als Verknüpfungsreagenz umgesetzt werden kann. Im Folgenden wird bei der genaueren Beschreibung der Erfindung auf ersteren Ansatz Bezug genommen, wobei dem Fachmann allerdings klar ist, dass die folgende Beschreibung mit entsprechenden Modifikationen auch auf ein Verfahren, das eine Mischung von Polyisocyanaten als Ausgangsmaterial verwendet, anwendbar ist.

Sofern in der vorliegenden Anmeldung auf Molekulargewichte Bezug genommen wird, beziehen sich die Angaben, sofern nicht anders angegeben, auf das Gewichtsmittel und nicht das arithmetische Mittel, d.h. den M_{w}-Wert.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyesterpolyol" bedeutet somit beispielsweise mindestens eine Art von Polyesterpolyol, d.h. dass eine Art von Polyesterpolyol oder eine Mischung mehrerer verschiedener Polyesterpolyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

Die hierin verwendeten Polyole, die mindestens eine ionische oder potentiell ionische hydrophile Gruppe aufweisen sind vorzugsweise Verbindungen mit anionischen oder potentiell anionischen Gruppen. Beispiele für solche Verbindungen sind Polyetherpolyole, die mindestens eine, vorzugsweise pro Molekül genau eine, anionische oder potentiell anionische hydrophile Gruppe aufweisen.

Generell sind als ionische Gruppen geeignet, ohne darauf beschränkt zu sein, Sulfat-, Sulfonat-, Phosphat-, Phosphonat-, Carboxylat-, und Ammonium-Gruppen, sowie ionische Heterozyklen, insbesondere stickstoffhaltige, 5-6-gliedrige Heterozyklen. Potentiell ionische Gruppe schließen ein, sind aber nicht beschränkt auf solche, die ausgewählt werden aus der Gruppe bestehend aus Carbonsäure- und Amino-Gruppen sowie ungeladenen Heterozyklen, insbesondere stickstoffhaltigen, 5-6-gliedrigen Heterozyklen. "Potentiell ionisch" bezieht sich hierin auf die Eigenschaft in einer wässrigen Umgebung bei entsprechendem pH-Wert als ionische Verbindung vorzuliegen. Polyole, die derartige ionische oder potentiell ionische Gruppen enthalten werden beispielsweise in US 3,756,992, US 3,479,310 und US 4,108,814 beschrieben.

Ganz besonders bevorzugt sind Sulfonatgruppen. Sulfonatgruppen aufweisende Diole werden beispielsweise in DE 2446440 und DE 2437218 beschrieben. Erfindungsgemäß bevorzugt werden Polyetherpolyole, insbesondere solche auf Basis von Propylenglykol, die mindestens eine Sulfonatgruppe enthalten. Geeignet ist beispielsweise ein alkoxyliertes, insbesondere propoxyliertes, Addukt von einem Alkendiol, insbesondere 2-Buten-1,4-diol, und einem Sulfit, insbesondere einem Hydrogensulfit, wie NaHSO₃.

Die hierin verwendeten (potentiell) ionischen Polyole haben in verschiedenen Ausführungsformen ein mittleres Molekulargewicht M_{w} im Bereich von 200 bis 1000, vorzugsweise 300 bis 500 g/mol. Besonders bevorzugt ist ein alkoxyliertes, insbesondere propoxyliertes, Addukt von einem Alkendiol, insbesondere 2-Buten-1,4-diol, und einem Sulfit, insbesondere einem Hydrogensulfit, wie NaHSO₃, mit einem Molekulargewicht M_{w} von ungefähr 430.

Die (potentiell) ionischen Polyole, insbesondere anionische Polyetherpolyole, werden in den Polyolmischungen in Mengen von 0,1 bis 10 Gew.-%, insbesondere 1-6 Gew.-% jeweils bezogen auf die Polyolmischung eingesetzt. Bei Mengen kleiner als 0,1 Gew.-%, gegebenenfalls auch schon kleiner als 1 Gew.-% kann die Hydrophilizität zu gering sein, um eine stabile Dispersion zu ermöglichen, bei Mengen größer 10 Gew.-% können die nachteiligen Wirkungen auf die Stabilisierung aufgrund von Phasentrennungen innerhalb der Partikel (Mikrophasentrennung in den Partikeln) überwiegen.

Die (potentiell) ionischen Polyole werden vorzugsweise in Mengen eingesetzt, die derart bemessen sind, dass der Gehalt an ionischen Gruppen im Polyurethan-Präpolymer maximal 20 Milliäquivalente, vorzugsweise maximal 10 Milliäquivalente pro 100 g Präpolymer beträgt.

Die in der Polyolmischung eingesetzten nichtionischen Polyole sind vorzugsweise solche, die hydrophil und nicht kristallisierend sind, d.h. nicht zur Kristallbildung fähig sind. In verschiedenen Ausführungsformen handelt es sich um Polylalkylenglykole, beispielsweise Polyethylenglykol, Polypropylenglykol, Polybutylenglykol, Poly(neo)pentylenglykol, oder Copolymere der genannten miteinander. In verschiedenen Ausführungsformen umfasst das Polyalkylenglykol Homo- oder Copolymer ein Polypropylenglykol Homo- oder Copolymer, insbesondere ein Polypropylenglykol Homopolymer oder ein Polypropylenglykol/Polyethylenglykol (Block)-Copolymer, vorzugsweise mit einem Ethylenoxidgehalt von 45 mol% oder weniger, noch bevorzugter 10 % oder weniger. Ebenfalls bevorzugt ist ein Polyethylenglykol Homopolymer oder ein Polypropylenglykol/Polyethylenglykol (Block)-Copolymer, vorzugsweise mit einem Ethylenoxidgehalt von 10 mol% oder mehr, noch bevorzugter 45 % oder mehr. Besonders bevorzugt sind Mischungen der beiden zuvor genannten Homo- und Copolymere von Ethylenglykol und Propylenglykol.

In verschiedenen, besonders bevorzugten Ausführungsformen machen aber Ethylenoxid-Einheiten nicht mehr als 5 Gew.-% des Präpolymers aus. Der Grund dafür ist, dass größere Anteile an den sehr hydrophilen Ethylenoxid-Einheiten zu einer unerwünschten Phasentrennung innerhalb der Polyurethansegmente des Hybridpolymers führen können, insbesondere wenn der Polyurethanteil größere Mengen an zur Kristallisation neigenden Polyoleinheiten enthält.

Die hierin verwendeten nichtionischen Polyole haben in verschiedenen Ausführungsformen ein mittleres Molekulargewicht M_{w} im Bereich von 1000 bis 4000, vorzugsweise 1500 bis 2500 g/mol.

Die nichtionischen Polyole, insbesondere Polyetherpolyole, werden in den Polyolmischungen in Mengen von 0,5 bis 15 Gew.-%, insbesondere 3 bis 10 Gew.-% jeweils bezogen auf die Polyolmischung eingesetzt. Wie bereits erwähnt, ist der Gehalt an Ethylenoxid-Einheiten in dem Präpolymer vorzugsweise kleiner als 5 Gew.-%, da höhere Anteile die Phasentrennung innerhalb der Polyurethananteile der Partikel fördern können.

Das mindestens eine Vinyl-funktionalisierte Polyol kann vorzugsweise ein Vinylgruppen-enthaltendes Diol sein. Generell bezieht sich "Vinyl-funktionalisiertes Polyol" auf das Reaktionsprodukt einer Polyol-Verbindung und einer Verbindung mit mindestens einer Vinylgruppe. Das Reaktionsprodukt weist mindestens eine Hydroxylgruppe auf, muss aber nicht zwingend zwei oder mehr Hydroxylgruppen aufweisen. Im Fall von Vinylethern kann somit bei Verwendung eines Diols und Allylalkohol als Ausgangsstoffe ein Vinylether mit nur einer Hydroxygruppe entstehen, der aber ebenfalls noch unter den Begriff "Vinyl-funktionalisiertes Polyol" fällt. Der Begriff erfasst somit im Sinne der Erfindung Verbindungen mit mindestens einer Vinyl- und mindestens einer Hydroxylgruppe. Es ist allerdings bevorzugt, dass das Vinyl-funktionalisierte Polyol mindestens eine Vinyl- und mindestens zwei Hydroxylgruppen enthält.

Die Art des verwendeten Vinyl-funktionalisierten Polyols kann davon abhängen, ob es (zusammen mit den anderen Polyolen) in die Polyurethankette eingebaut wird, wobei hier Verbindungen mit mindestens 2 Hydroxylgruppen bevorzugt verwendet werden, oder ob es mit den Termini eines NCO-funktionalisierten Polyurethan-Präpolymers verknüpft wird, wobei hier vorzugsweise Verbindungen mit nur einer Hydroxylgruppe verwendet werden.

In verschiedenen bevorzugten Ausführungsformen ist das Vinyl-funktionalisierte Polyol ein Allyl-funktionalisiertes Polyol, insbesondere ein Polyol-Allylether. Für die Herstellung eines Vinylterminierten Polyurethan-Präpolymers wird der Polyol-Allylether vorzugsweise ausgewählt aus Monoethern von Allylalkohol mit einem Diol, insbesondere Ethandiol, 1,2-Propandiol, 1,3-Propandiol, 1,4-Butandiol, 1,6-Hexandiol, und Mischungen davon. Bei der Herstellung eines NCOterminierten, Vinyl-funktionalisierten Polyurethan-Präpolymers wird der Polyol-Allylether dagegen vorzugsweise ausgewählt wird aus Monoethern von Allylalkohol mit einem Triol oder Polyol mit mehr als drei Hydroxylgruppen, insbesondere Glycerin.

Generell ist das Vinyl-funktionalisierte Polyol vorzugsweise ein monomeres Polyol.

Die mittleren Molekulargewichte Mw der erfindungsgemäß eingesetzten Vinyl-funktionalisierten Polyole liegen insbesondere im Bereich von 100 bis 400 g/mol.

Die Polyurethan-Präpolymere, die aus den Polyolen und Isocyanaten darstellbar sind, werden in den beschriebenen Verfahren mit Vinylgruppen-haltigen Silanen gemischt. Bei den verwendeten Vinylgruppen-haltigen Silanen, handelt es sich um Silane, die mindestens eine, vorzugsweise genau eine Vinylgruppe tragen. Die Silane schließen Alkyl- und insbesondere auch Alkoxysilane ein, sind aber nicht darauf beschränkt. Bevorzugt im Sinne der vorliegenden Erfindung sind Acryl- oder Methacrylgruppen-haltige Silane, insbesondere Acryl- oder Methacrylgruppen-haltige Di- oder Trialkoxysilane. Die Silane sind vorzugsweise solche der Formel R¹-Si(OR²)₃, wobei R¹ der Vinylgruppen-haltige Rest ist und jedes R² unabhängig ausgewählt wird aus linearem oder verzweigtem C₁₋₁₀ Alkyl, vorzugsweise linearem C₁₋₄ Alkyl, noch bevorzugter Methyl und Ethyl. In solchen Ausführungsformen kann R¹ insbesondere ein Acryl- oder Methacryloxyalkyl-Rest, beispielsweise der Formel H₂C=CR³-(CO)-O-(CH₂)ₙ- sein, wobei R³ H oder Methyl und n eine ganze Zahl von 1-10, vorzugsweise 3 ist.

Das Molekulargewicht der verwendeten Silane liegt in verschiedenen Ausführungsformen im Bereich zwischen 100 und 1000 g/mol, insbesondere zwischen 200 und 400 g/mol.

Die Silane werden vorzugsweise in Kombination mit weiteren Vinylmonomeren eingesetzt. Die Vinylmonomere dienen dabei als Lösungsmittel für die Polyurethan-Präpolymere und die Silane und co-polymerisieren im Polymerisationsschritt mit den funktionalisierten Silanen und Polyurethanen.

In verschiedenen Ausführungsformen der Erfindung umfasst die Vinylmonomere solche, deren Homopolymere eine Glasübergangstemperatur T_{g} von kleiner 0°C, vorzugsweise kleiner -30°C, besonders bevorzugt kleiner -50°C aufweisen. Das Vinylmonomer ist in verschiedenen Ausführungsformen so gewählt, dass es für die Dispergierung/Homogenisierung als Lösungsmittel für das Polyurethan-Präpolymer dienen kann.

Als Vinylmonomer sind beispielsweise Ester von ungesättigten, polymerisierbaren Carbonsäuren geeignet. Zum Beispiel kann das Vinylmonomer ein Ester von (Meth)acrylsäure, Crotonsäure und/oder Itaconsäure mit Polyetherglykolen, aliphatischen, cycloaliphatischen oder aromatischen Alkoholen sein. Weitere geeignete Verbindungen schließen ein, sind aber nicht beschränkt auf aromatische Vinylverbindungen, wie Styrol, alpha-Methylstyrol und Vinyltoluol, Ester von Vinylalkoholen, insbesondere Fettsäurevinylester, N-Alkylamide von ungesättigten polymierisierbaren Carbonsäuren, wie (Meth)acrylsäure, und weitere copolymerisierbare olefinische Monomere, wie (Meth)acrylnitril, Vinylchlorid, Ethylen, Butadien und Isopren.

Vorzugsweise sind die Vinylmonomere Acrylat- oder Methacrylatmonomere, insbesondere ausgewählt aus Acrylat- und Methacrylatmonomeren, vorzugsweise aus Alkylestern der Acryl- oder Methacrylsäure mit Monoalkoholen mit 1-20, vorzugsweise 1 bis 12 Kohlenstoffatomen. Besonders bevorzugte Vinylmonomere schließen Methylmethacrylat, Butyl(meth)acrylat, 2-Ethylhexyl(meth)acrylat, Octyl(meth)acrylat und Dodecanyl(meth)acrylat ein.

Ebenfalls als Vinylmonomere geeignet sind Verbindungen mit mehreren Vinyl- oder Acrylatgruppen, die dann zur Quervernetzung der Acrylatpolymerketten eingesetzt werden können. Das kann vorteilhaft sein, um die Kernmorphologie des Acrylatkerns zu stabilisieren. Eine beispielshafte Verbindungsklasse sind (Poly-/Oligo-)Alkylenglykoldiacrylate, wie z.B. Tripropylenglykoldiacrylat. Diese werden abhängig von dem gewünschten Vernetzungsgrad üblicherweise in Mengen von 0 bis 5 Gew.-% bezogen auf das Gesamtgewicht der Vinylmonomere eingesetzt.

Es ist ebenfalls möglich und sogar bevorzugt Mischungen verschiedener Vinylmonomere einzusetzen. In solchen Mischungen kann abhängig von der gewünschten Morphologie der Partikel der Anteil hydrophober Monomere überwiegen, insbesondere größer als 50, bevorzugter größer als 70 Gew.-% bezogen auf das Gesamtgewicht der Vinylmonomere sein. Werden überwiegend hydrophobe Vinylmonomere eingesetzt, können Hybridpartikel mit einer Core-Shell(CS)-Morphologie gebildet werden, in denen der Kern im Wesentlichen aus den Vinylpolymeranteil und die Schale im Wesentlichen aus dem Polyurethananteil besteht. Die Silane können hierbei über beide Phasen verteilt oder vorzugsweise in der Schalen- oder Kernphase lokalisiert sein, abhängig von ihrer Hydrophilizität.

Hydrophile Vinylmonomere werden insbesondere als copolymerisierbare Monomere in Mischungen mit hydrophoben Monomeren eingesetzt. Beispiele für hydrophile Vinylmonomere schließen ein, ohne Einschränkung, kurzkettige Alkylester von (Meth)Acrylsäure, wie beispielsweise Methylmethacrylat, Acrylamid, Methacrylamid, Hydroxyalkyl(meth)acrylate wie Hydroxyethylacrylat oder -methacrylat, Hydroxypropyl(meth)acrylat, Hydroxy-butyl(meth)acrylat, Hydroxyethylacrylamid; N-Vinyllactame, wie N-Vinylpyrrolidon, Ethylenglykolester von (Meth)acrylsäure und Teilester von Glycerol und (Meth)acrylsäure; und Ureido(meth)acrylate. Solche hydrophilen Monomere können in Anteilen zugegeben werden, um die Emulgierungseigenschaften zu verbessern. Der Anteil hydrophiler Monomere bezogen auf das Gesamtgewicht der Vinylmonomere kann dabei bis zu 100 Gew.-% betragen, beträgt in Ausführungsformen in denen CS-Partikel gebildet werden sollen aber üblicherweise nur bis zu 30 Gew.-%, bevorzugt bis 20 Gew.-%.

In bevorzugten Ausführungsformen werden ein oder mehrere hydrophobe oder ultrahydrophobe Alkyl(meth)acrylate eingesetzt. Hydrophobe Alkyl(meth)acrylate sind insbesondere n-Butyl(meth)acrylat. Ultrahydrophobe Alkyl(meth)acrylaten schließen beispielsweise 2-Ethylhexyl(meth)acrylat und Dodecanyl(meth)acrylat ein. Ultrahydrophobe Monomere werden insbesondere in Mengen kleiner 20 Gew.-% bezogen auf das Gesamtgewicht der Vinylmonomere eingesetzt.

Die Begriffe "Vinyl" bzw. "Allyl", wie hierin verwendet, beziehen sich insbesondere auf die Gruppen H₂C=CRR' bzw. H₂C=CR-CR'R", wobei R, R' und R" beliebige Reste sind.

In den hierin beschriebenen Verfahren werden in verschiedenen bevorzugten Ausführungsformen die Vinylgruppen-haltigen Polyole und die Vinylmonomere so ausgewählt, dass die Reaktivität der Vinylgruppe der Vinylmonomere deutlich größer ist, als die Reaktivität der Vinylgruppen der Polyole. Das ist insofern von Bedeutung, als dass eine höhere Reaktivität der Vinylmonomere verhindert, dass bereits in einer sehr frühen Phase der radikalischen Polymerisation der Vinylgruppen eine Vernetzung von Polyurethan-Präpolymer und Polyacrylat stattfindet. Das ist insofern entscheidend, da die frühe Bildung von Pfropf-Copolymeren einer Phasentrennung in PUreiche und Acrylat-reiche Phasen entgegenwirkt und somit die Bildung einer Core-Shell-Morphologie verzögern oder sogar verhindern kann. Durch die Verwendung von Vinylgruppen im Polyurethanpräpolymer, die gegenüber den Vinylmonomeren deutlich weniger reaktiv sind, kommt es vorzugsweise zu einer Polymerisation der Vinylmonomere und Bildung von Acrylatpolymeren, die die Phasentrennung zwischen PU-reicher Schalenphase und Acrylat-reicher Kernphase fördern. Die Vernetzung von PU-Teil und Acrylat-Teil findet dann hauptsächlich in den späteren Phasen der Polymerisation statt, wenn die Phasentrennung und die Bildung der Core-Shell-Morphologie bereits stattgefunden hat. In diesem Fall ergeben sich dann Core-Shell-Partikel, in denen der Acrylatkern kovalent mit der PU-Schale vernetzt ist, was einer makroskopischen Phasenseparation bei Erhöhung der Temperatur (Annealing) durch Verringerung der Grenzphasenenergie entgegenwirkt.

In verschiedenen Ausführungsformen der Erfindung sind die Vinylgruppen der Vinylmonomere daher mindestens 2-fach, vorzugsweise mindestens 3- bis 4-fach, noch bevorzugter 8- bis 10-fach reaktiver als die Vinylgruppen der Polyole, die in das Polyurethan-Präpolymer eingebaut werden. Als Maß für die Reaktivität der Vinylgruppen können beispielsweise die Q/e-Werte herangezogen werden. Diese ergeben sich aus einer semiempirischen Methode der Zuordnung von Reaktivitäten Q und Polaritäten e an Monomerverbindungen, die von Alfrey und Price beschrieben wurde. Mit dieser Methode lassen sich Reaktivitätsverhältnisse allein aufgrund dieser beiden Parameter berechnen. Die grafische Auftragung der Reaktivitäten verschiedener Monomere im Q-e-Koordinatensystem wird auch als Q-e-Schema bezeichnet. Die Parameter Q und e werden aus experimentellen Befunden bestimmt und in Relation zum Standard Styrol gesetzt, der willkürlich die Werte Q=1 und e= -0,8 zugeordnet bekommen hat.

Die Q- und e-Werte können beispielsweise aus ¹³C-NMR-Daten errechnet werden, wie von Borchardt und Dalrymple (Journal of Polymer Science (1982), 20: 1745-1764) beschrieben.

In verschiedenen Ausführungsformen der Erfindung beträgt der Q-Wert des Vinylmonomers 0,1 oder mehr und der Q-Wert des Vinyl-funktionalisierten Polyols 0,01 oder weniger. In weiteren bevorzugten Ausführungsformen beträgt der e-Wert des Vinylmonomers 0,2 oder mehr und der e-Wert des Vinyl-funktionalisierten Polyols -0,6 oder weniger.

Die oben angegebenen Q- und e-Wert Verhältnisse werden beispielsweise erreicht, wenn die Vinylgruppe des mindestens einen Vinylmonomers eine Acryl- oder Methacrylgruppe und die Vinylgruppe des mindestens einen Vinyl-funktionalisierten Polyols eine Allylgruppe, insbesondere eine Allylethergruppe ist.

Die Vinyl-funktionalisierten Silane können dabei in ihrer Reaktivität frei gewählt werden. Es ist allerdings bevorzugt, dass sie ähnlich reaktiv sind wie die Vinylmonomere, d.h. deutlich reaktiver sind als die verwendeten Vinyl-funktionalisierten Polyole. Dementsprechend sind die oben gemachten Angaben zu den Vinylmonomeren und ihrer Reaktivität gleichermaßen auf die Vinylhaltigen Silane anwendbar, insbesondere was Q- und e-Werte betrifft. Die Silane enthalten daher ebenfalls vorzugsweise eine Acryl- oder Methacrylgruppe.

In verschiedenen bevorzugten Ausführungsformen der Erfindung werden in den Verfahren ferner Polyesterpolyole eingesetzt, insbesondere solche die zur Kristallisation neigen. Dabei werden insbesondere solche Polyesterpolyole bevorzugt, deren Schmelzpunkt Tₘ größer als 0°C, vorzugsweise größer als 40°C ist. Die Angabe des Schmelzpunktes bezieht sich dabei auf den Schmelzpunkt entsprechender hochmolekularer, linearer Polyester Hompolymere. Verfahren die zur Bestimmung der Schmelzpunkte geeignet sind, sind im Stand der Technik bekannt.

Die verwendeten Polyester sind vorzugsweise Polyole, d.h. weisen freie Hydroxylgruppen auf. Insbesondere handelt es sich um Polyesterdiole, d.h. (vorzugsweise lineare) Polyester die zwei endständige Hydroxylgruppen aufweisen.

Geeignete Polyester lassen sich mittels bekannter Verfahren, beispielsweise Kondensationsreaktionen, aus Polyolen und Polysäuren, insbesondere aus Diolen und Disäuren, herstellen. Als Diole werden insbesondere aliphatische Alkandiole, wie Ethandiol, 1,2-Propandiol, 1,3-Propandiol, 1,4-Butandiol, Neopentyldiol, 1,6-Hexandiol, und Mischungen davon eingesetzt. Prinzipiell ist auch der Einsatz zyklischer Diole oder aromatischer Diole denkbar, bevorzugt wird allerdings die Verwendung linearer aliphatischer Diole, wie der vorstehend genannten, insbesondere von 1,2-Propandiol, 1,3-Propandiol, 1,4-Butandiol und 1,6-Hexandiol, ganz besonders bevorzugt von 1,4-Butandiol. Als Disäuren werden vor allem Dicarbonsäuren eingesetzt und hier vorzugsweise lineare aliphatische Dicarbonsäuren. Beispiele für geeignete Säuren schließen ein, sind aber nicht beschränkt auf Oxalsäure, Malonsäure, Bernsteinsäure, Glutarsäure, Adipinsäure, Pimelinsäure, Suberinsäure und Mischungen davon. Auch hier ist es prinzipiell möglich zyklische oder aromatische Dicarbonsäuren, wie beispielsweise Phthalsäure, Terephthalsäure oder Isophthalsäure einzusetzen, die resultierenden Polyester haben allerdings im Vergleich zu solchen die mit aliphatischen Dicarbonsäuren hergestellt sind deutlich erhöhte Schmelz- und Glasübergangstemperaturen. Ein besonders bevorzugt eingesetzter Polyester ist Poly(tetramethylen adipat) (PTMA), welches durch eine Kondensationsreaktion aus 1,4-Butandiol und Adipinsäure darstellbar ist.

Alternativ können geeignete Polyester auch aus zyklischen Estern, insbesondere Lactonen, oder Hydroxycarbonsäuren synthetisiert werden. Ein besonders bevorzugt eingesetzter Ester ist hierbei ε-Caprolacton, das Lacton der ω-Hydroxycapronsäure, wobei der Polyester daraus durch ringöffnende Polymerisation darstellbar ist.

Die zur Bildung der Polyurethan-Präpolymere eingesetzten Polyesterpolyole haben üblicherweise ein mittleres Molekulargewicht M_{w} von 1000 bis 5000, vorzugsweise 2000-3500 g/mol.

Die Polyesterpolyole werden in den Polyolmischungen in Mengen von 40 bis 95 Gew.-%, insbesondere 60-85 Gew.-% jeweils bezogen auf die Polyolmischung eingesetzt. Bei Mengen größer 95 Gew.-%, gegebenenfalls auch schon größer 85 Gew.-% kann die Neigung zur Kristallisation unter Umständen nicht mehr durch die ionischen bzw. nichtionischen, nicht kristallisierbaren Polyole kompensiert werden, was sich nachteilig auf die Stabilität auswirken kann. Bei Mengen unter 40 Gew.-% haben die Partikel nicht mehr die gewünschten physikalischen Eigenschaften.

Die in den hierin beschriebenen Verfahren eingesetzten Polyole können daher, jeweils bezogen auf das Gesamtgewicht der Polyole, umfassen:
(a) 0,1-10 Gew.-%, insbesondere 1-6 Gew.-%, des mindestens einen Polyols, vorzugsweise Polyetherpoyols, das mindestens eine ionische oder potentiell ionische hydrophile Gruppe aufweist;
(b) 0,5-15 Gew.-%, insbesondere 3-10 Gew.-%, des mindestens einen nichtionischen Polyols, vorzugsweise nichtionischen hydrophilen Polyetherpolyols;
(c) 0,1 bis 10 Gew.-%, insbesondere 0,5-3 Gew.-%, des mindestens einen Vinyl-funktionalisierten Polyols; und
(d) optional 40-95 Gew.-%, insbesondere 60-85 Gew.-%, des mindestens einen Polyesterpolyols, das einen Schmelzpunkt Tₘ von größer 0°C, vorzugsweise größer 40°C besitzt.

In bevorzugten Ausführungsformen ergeben die Mengen der Polyole (a)-(d) zusammen 100 Gew.-%, d.h. das Polyurethan-Präpolymer enthält keine anderen Polyolkomponenten.

In verschiedenen Ausführungsformen der hierin beschriebenen Verfahren weist das Polyurethan-Präpolymer ein mittleres Molekulargewicht Mw im Bereich von 3000-15000 auf, abhängig von der gewünschten Verwendung sind Bereiche von 5000 bis 10000, 3000 bis 6000 oder 4000 bis 5000 g/mol bevorzugt. Die gewünschten Molekulargewichte werden durch die Verwendung entsprechender Mengen an Polyolen und Polyisocyanaten eingestellt und mittels geeigneter Messverfahren, wie Gelpermeationschromatographie (GPC), bestimmt. Entsprechende Kalkulationen und Verfahren sind dem Fachmann ohne weiteres bekannt.

Wie bereits oben beschrieben kann der Gehalt an ionischen Gruppen im Polyurethan-Präpolymer vorzugsweise maximal 20 Milliäquivalente, vorzugsweise maximal 10 Milliäquivalente pro 100 g Präpolymer betragen.

Das Präpolymer enthält vorzugsweise weniger als 5 Gew.-% Ethylenoxid-Einheiten, d.h. das mittels der hierin beschriebenen Verfahren synthetisierte Polyurethan-Präpolymer enthält bezogen auf sein Gesamtgewicht weniger als 5 Gew.-% EO-Einheiten.

Es ist ferner bevorzugt, das organische Polyisocyanat im molaren Überschuss relativ zu der Polyolmischung einzusetzen, um ein NCO-funktionalisiertes Polyurethan-Präpolymer zu erhalten. Wenn die Polyisocyanate in molarem Überschuss eingesetzt werden, beträgt das OH/NCO Äquivalentverhältnis vorzugsweise 1:1,1 bis 1:4, bevorzugter 1:1,2 bis 1:1,3.

Das organische Polyisocyanat ist eine Verbindung mit mindestens zwei Isocyanat-Gruppen (-NCO), insbesondere ein Diisocyanat. Es kann allerdings unter bestimmten Umständen vorteilhaft sein, kleine Mengen von Isocyanaten mit einer Funktionalität größer 2 einzusetzen ist. In derartigen Fällen werden insbesondere Polyisocyanate auf Basis von Hexamethylendiisocyanat oder polymeres Diphenylmethandiisocyanat verwendet. Geeignete Polyisocyanate schließen ein, sind aber nicht beschränkt auf aromatische Diisocyanate, wie beispielsweise Diphenylmethandiisocyanat (MDI), polymeres MDI (PMDI) und/oder Toluoldiisocyanat (TDI), und aliphatische Diisocyanate, wie beispielsweise Hexamethylendiisocyanat (HDI), Isophorondiisocyanat (IPDI) und/oder Methylen-4,4-bis(cyclohexyl)diisocyanat (H12MDI), oder Mischungen davon. Obwohl sowohl aromatische als auch aliphatische Polyisocyanate verwendet werden können, sind erfindungsgemäß aliphatische Polyisocyanate, insbesondere Diisocyanate, wie IPDI und HDI, bevorzugt.

Zur Bildung des Präpolymers werden die Polyole und die Polyisocyanate vorzugsweise gemischt, wobei die Mischung erhitzt werden kann. Das kann insbesondere dann erforderlich sein, wenn die verwendeten Polyole bei Raumtemperatur fest sind und geschmolzen werden müssen, um die Polyolmischung zu bilden. In bevorzugten Ausführungsformen werden die Polyole kombiniert und unter Rühren und Vakuum auf ungefähr 70 bis 95°C, beispielsweise ungefähr 75°C, erhitzt, um sie zu trocknen.. Die Präpolymersynthese erfolgt üblicherweise durch Zugabe der Isocyanate und bei erhöhter Temperatur, vorzugsweise im Bereich zwischen 70 und 95°C, über einen Zeitraum von ungefähr 2 bis ungefähr 5 Stunden, vorzugsweise ungefähr 3 Stunden. Die Reaktion erfolgt in Gegenwart eines Katalysators, der zugegeben wird, vorzugsweise eines Zinn-basierten Katalysators, noch bevorzugter Dibutylzinndilaurat (DBTDL) oder Dimethylzinn-Dineodecanoat, wobei letzteres beispielsweise als Fomrez UL-28 kommerziell erhältlich ist. Die Reaktion wird durchgeführt bis der freie Isocyanat-Gehalt nahe dem kalkulierten Wert ist, wie mittels Standardtitration mit Dibutylamin bestimmt. Bevorzugte Werte für den freien Isocyanatgehalt liegen im Bereich von 0,2 bis 2 Gew.-%, vorzugsweise 0,6 bis 1,3 Gew.-% relativ zu der Gesamtmenge an Polyol und Polyisocyanat in der Mischung. Sobald der gewünschte Wert erreicht ist, wird die Temperatur reduziert, beispielsweise auf 60 °C.

"Ungefähr", wie hierin im Zusammenhang mit Zahlenangaben verwendet, bezieht sich auf ± 10 %, vorzugsweise ± 5 % des Zahlenwerts auf welchen sich die Angabe bezieht. "Ungefähr 70 °C" bedeutet somit 70 ± 7, vorzugsweise 70 ± 3.5 °C.

Wie bereits oben erwähnt wird das Isocyanat vorzugsweise im molaren Überschuss bezogen auf die stöchiometrische Konzentration, die erforderlich ist um alle Hydroxylgruppen vollständig umzusetzen, eingesetzt. Der Überschuss kann ein OH/NCO Äquivalent-Verhältnis von 1:1.1 bis 1:4 sein. Vorzugsweise ist die Menge an eingesetztem Polyisocyanat 20 % bis 150 % größer als die erforderliche stöchiometrische Konzentration um alle Hydroxylgruppen umzusetzen.

Das gebildete Präpolymer wird dann mit den Vinylgruppen-haltigen Silanen und gegebenenfalls den Vinylmonomeren kombiniert, insbesondere in den Vinylgruppen-haltigen Silanen und optional Vinylmonomeren oder Mischung von Vinylmonomeren gelöst oder dispergiert. Dabei wird eine Polyurethan-Präpolymer/Silan-Mischung bzw. eine Polyurethan-Präpolymer/Silan/Vinylmonomer-Mischung gebildet. Derartige Mischungen enthalten das Polyurethan-Präpolymer und die Silane bzw. die Silan/Vinylmonomer-Mischung jeweils insbesondere in Mengen von 1-99 Gew.-% bezogen auf die Mischung, wobei PU-Präpolymer/Silan oder PU-Präpolymer/(Silan/Vinylmonomer) Gewichts-Verhältnisse im Bereich von 1:3 bis 3:1, vorzugsweise 2:3 bis 3:2 bevorzugt sind. Wird das Silan in Mischungen mit Vinylmonomeren eingesetzt, dann kann das Gew.-Verhältnis Silan zu Vinylmonomeren im Bereich von 1:15 bis 1:1, vorzugsweise etwa 1:15 bis 1:5 liegen.

Um die Polyurethan-Silan-Hybrid-Dispersion zu bilden, wird die Polyurethan-Präpolymer/Silan- bzw. die PU-Präpolymer/Silan/Vinylmonomer-Mischung in eine kontinuierliche wässrige Phase, üblicherweise Wasser oder eine wässrige Lösung, dispergiert bzw. emulgiert. Es kann hierbei beispielsweise erst eine Präemulsion gebildet werden, die dann in einem nachfolgenden Schritt mittels eines geeigneten Verfahren, beispielsweise eines Hochscherverfahrens, homogenisiert wird, um eine Miniemulsion zu bilden. Die Mengen sind dabei vorzugsweise so bemessen, dass die disperse Phase 1-70 Vol.-%, vorzugsweise 30-50 Vol.-% ausmacht.

"Miniemulsion" bezieht sich in diesem Zusammenhang auf eine Emulsion, in der die emulgierte Phase in Form von Tröpfchen oder Partikeln, vorzugsweise mit annähernd sphärischer Form, in der kontinuierlichen Wasserphase vorliegen. Dabei haben die Tröpfchen/Partikel eine Ausdehnung in der größten Dimension, bei annähernd sphärischer Form einen Durchmesser, im Größenbereich von 10 bis 500 nm, insbesondere 50 bis 500 nm, noch bevorzugter 200 bis 400 nm.

Schritt (iii) des hierin beschriebenen Verfahrens umfasst daher in verschiedenen Ausführungsformen die Schritte:
(a) Emulgieren der Polyurethan-Präpolymer/Silan-Mischung bzw. der Polyurethan-Präpolymer/Silan/Vinylmonomer-Mischung in eine kontinuierliche wässrige Phase, insbesondere Wasser, um eine Präemulsion zu bilden; und
(b) Homogenisieren der Präemulsion um eine stabile Miniemulsion zu bilden.

Der Dispergier- bzw. Emulgierschritt kann bei erhöhter Temperatur, beispielsweise im Bereich von 30-60, beispielsweise ungefähr 40°C erfolgen. Zur Bildung der Präemulsion sind mechanische Rührer oder Rotor-Stator-Mischer, beispielsweise ein Ultra-Turrax-Gerät, ausreichend, zur Bildung der Miniemulsion werden vorzugsweise ein Homogenisator, beispielsweise ein Microfluidizer (wie von der Firma Microfluidics erhältlich) oder ein Ultraschallgerät eingesetzt.

Der Dispergierschritt, insbesondere der Homogenisierungsschritt, kann mittels eines Hochscherverfahrens erfolgen. Geeignete Hochscherverfahren, weisen vorzugsweise Scherraten von mindestens 1.000.000/s und/oder einen Energieeintrag pro Zeit von mindestens 10⁶ J/s*m³ auf. Die Scherrate kann mittels im Stand der Technik bekannter Verfahren berechnet werden bzw. ist für gegebene Geräte bekannt. Allgemein berechnet sich die Scherrate aus dem Verhältnis der maximalen Strömungsgeschwindigkeit (Vₘₐₓ) eines Stoffes, beispielsweise einer Flüssigkeit in einer Kapillare, und dem Radius des durchströmten Hohlkörpers. Der Energieeintrag pro Zeit ergibt sich aus der Energiedichte in J/m³ pro Zeit.

Nach dem Dispergierschritt in welchem Polyurethan-Silan-Hybrid tröpfchen oder -partikel gebildet werden, werden die Vinylgruppen in dem Hybridmaterial, d.h. die Vinylgruppen der Silane und die Vinylgruppen im Polyurethan-Präpolymer sowie ggf. die Vinylmonomere polymerisiert. Die Polymerisierung erfolgt vorzugsweise mittels radikalischer Polymerisation. Für die Initiation der Polymerisation können geeignete Katalysatoren, beispielsweise radikalische Redoxinitiatoren verwendet werden. Beispiele für solche Katalysatoren schließen ein, ohne darauf beschränkt zu sein, als Oxidationsmittel Persulfate oder Hydroperoxide und als Reduktionsmittel Thioharnstoffdioxid, Ascorbinsäure, Formaldehydsulfoxilat (SFS), Tetramethylethylendiamin (TMEDA), Bruggolit 6 and 7 (FF6 and FF7) und Natriummetabisulfite. Eine geeignete Kombination besteht aus Thioharnstoffdioxid und t-Butylhydroperoxid. Die Polymerisation kann bei erhöhter Temperatur, beispielsweise bei 45-80°C durchgeführt werden. Generell ist ein Temperaturbereich von 20-80°C bevorzugt, ganz besonders der Bereich von 20-55°C.

Das in den beschriebenen Verfahren hergestellte NCO-terminierte, Vinyl-funktionalisierte Polyurethan-Präpolymer oder Polyurethan-Silan-(Vinylpolymer)-Hybrid kann mit einem geeigneten Kettenverlängerer oder Wasser umgesetzt werden, um alle freien NCO-Gruppen umzusetzen. Ein solcher Kettenverlängerungsschritt kann vor, nach oder gleichzeitig mit dem Polymerisationsschritt (der Vinylgruppen und ggf. -monomere) durchgeführt werden. Bevorzugt ist allerdings die Kettenverlängerung vor der Polymerisationsreaktion, d.h. vor Schritt (iv) durchzuführen.

Dazu wird zu der Miniemulsion ein geeigneter Kettenverlängerer gegeben und mit dem Präpolymer zur Reaktion gebracht. Geeignete Kettenverlängerer sind allgemein Verbindungen, die mindestens zwei Gruppen aufweisen, die gegenüber den Endgruppen des Präpolymers, üblicherweise -NCO Gruppen, reaktiv sind. Bespiele für Kettenverlängerer, die mindestens zwei terminal NCO-reaktive Gruppen enthalten, schließen ein, ohne darauf beschränkt zu sein, Diamine, wie beispielsweise Hydrazin, ein Alkylendiamin oder Cycloalkylendiamin, vorzugsweise Ethylendiamin, Isophorondiamin, Piperazin, oder Polyetheramin, und Diole, wie beispielsweise 1,6-Hexandiol, 1,4-Butandiol oder 2-Butyl-2-Ethyl-1,3-propandiol. Die Kettenverlängerungsreaktion kann bis zur vollständigen Konversion der Isocyanat-Gruppen durchgeführt werden, d.h. der Kettenverlängerer wird kontinuierlich so lange zugegeben, bis keine freien Isocyanatgruppen mehr nachweisbar sind. Für die Kettenverlängerungsreaktion kann die Gegenwart eines Katalysators bzw. eine erhöhte Temperatur erforderlich sein. Der Katalysator kann aus denen ausgewählt werden, die auch für die Herstellung des Präpolymers geeignet sind.

Es ist in verschiedenen Ausführungsformen der Erfindung möglich, den Kettenverlängerung bereits in Schritt (ii) zu der Mischung zu geben, ggf. in Kombination mit einem Katalysator, und dann die Mischung, die bereits den Kettenverlängerer und ggf. den Katalysator enthält, in die wässrige Phase zu dispergieren. Dadurch kann beispielsweise eine Reaktion der NCO-Gruppen mit Wasser minimiert werden.

Die beschriebenen Verfahren ergeben stabil in Wasser dispergierte oder dispergierbare Partikel mit einem mittleren Durchmesser im Submikrometerbereich, insbesondere im Bereich 50-500 nm, bevorzugt 200-400 nm. Die Partikel sind vorzugsweise im Wesentlichen monodispers, d.h. die Partikelgrößenverteilung ist sehr schmal.

Obwohl durch die Verwendung der ionischen und nichtionischen hydrophilen Einheiten bei der Herstellung des PU-Präpolymers eine ausreichende Stabilisierung der Partikel in der kontinuierlichen Phase sichergestellt sein sollte, ist es möglich zusätzlich weitere Stabilisatoren, wie insbesondere Tenside oder andere Emulgatoren, wie beispielsweise Polyvinylalkohol, einzusetzen. Es ist allerdings bevorzugt auf derartige externe Stabilisatoren zu verzichten, da diese die Leistung der Dispersionen bei der Anwendung in Klebstoffen und Beschichtungsmitteln negativ beeinflussen können.

Die Partikel können sich abhängig von der Zusammensetzung durch eine Core-Shell-Morphologie auszeichnen, wobei die Schale in wesentlichen Teilen aus dem hydrophileren Polymerteil, insbesondere dem Polyurethanteil, des Hybridmaterials gebildet wird und hier insbesondere den ionischen und hydrophilen Segmenten des Polyurethananteils. D.h. die Außenseite der Schale weist die ionischen, hydrophilen Segmente auf, während die hydrophoberen Anteile des Polyurethans, beispielsweise die aus den beschriebenen Polyersterpolyolen abgeleiteten Einheiten, zum Kern hin orientiert sind. Der Kern besteht im Wesentlichen aus den hydrophoben Anteilen des Polymers, beispielsweise dem Silan- und/oder Acrylatanteil des Hybridmaterials. Um eine Entmischung des Hybridmaterials, beispielsweise bei starker Temperaturerhöhung wie sie bei Annealing auftritt, zu verhindern, können das Kernmaterial und das Schalenmaterial miteinander kovalent vernetzt sein. Das verringert die Grenzflächenenergie und wirkt somit einer Entmischung entgegen. Zusätzlich kann die strukturelle Integrität des Kerns auch durch eine Quervernetzung des Silans oder Acrylats verstärkt werden.

Wie bereits oben erwähnt, betrifft die Erfindung auch die Dispersionen, die mit den hierin beschriebenen Verfahren hergestellt werden bzw. die entsprechende Polyurethan-Silan-Hybrid (prä)polymere und die daraus bestehenden Partikel mit oder ohne Core-Shell-Morphologie. Die Dispersionen können in verschiedenen Ausführungsformen Feststoffgehalte im Bereich von 10 bis 60 Gew.-%, vorzugsweise ungefähr 15 bis 50 Gew.-%, noch bevorzugter 20 bis 40 Gew.-% oder 40 bis 50 Gew.-% aufweisen.

Die Polyurethan-Silan-Hybrid-Dispersionen können beispielsweise in Klebstoff- oder Beschichtungszusammensetzungen verwendet werden. Weitere Anwendungsgebiete schließen Lacke, Waschmittel und Kosmetika ein. Dementsprechend richtet sich die Erfindung auch auf entsprechende Zusammensetzungen, die die Dispersionen der Erfindung enthalten. Derartige Zusammensetzungen können weitere Bestandteile, wie sie im Stand der Technik üblich und bekannt sind, enthalten. Insbesondere richtet sich die Erfindung auch auf (Beschichtungs-)Filme, die die hierin beschriebenen Hybridmaterialien enthalten.

Werden die hierin beschriebenen Dispersionen als Klebstoffe oder Beschichtungsmittel eingesetzt, kann die Auftragung auf ein Substrat mit den im Stand der Technik üblichen Verfahren erfolgen, beispielsweise Sprühen, Tauchen, Rotationsbeschichten, etc.. Die Trocknungstemperaturen liegen vorzugsweise im Bereich von 20-100°C. insbesondere 60-80°C.

Die folgenden Beispiele dienen der Erläuterung der Erfindung, die Erfindung ist aber nicht darauf beschränkt.

### Beispiele

### Beispiel 1:

### Polyurethansynthese:

Die eingesetzten Polyole (Polyesterpolyole und Tergitol) wurden vorgelegt, bei 70°C im Vakuum (<1mbar) für 40 Minuten entwässert und dann mit Stickstoff belüftet. Dann wurden der Gylcerolallylether und das sulfonierte Diol zugegeben und kurz verrührt. Dann wurden IPDI und DBTL (Katalysator) zugeben und bei 80°C unter Stickstoff gerührt. Nach 5 Stunden war ein NCO-Gehalt von 1,52 % erreicht (theor. 1,53 %). Alle Reaktionen erfolgten unter Stickstoffatmosphäre. Die Sythesen wurden in einem Vierhalsrundkolben mit Thermometer, Schliffolive zur Stickstoffeinleitung, KPG-Rührer sowie Rückflusskühler mit aufgesetztem Trockenrohr durchgeführt. Danach wurde eine Mischung von Methylmethacrylat (MMA)/Laurylmethacrylat (LMA)/Tripropylenglykoldiacrylat (TPGDA) im Massenverhältnis 1:1 zu dem Präpolymer gegeben sowie 0,6 g Aminopropyltriethoxysilan (AMEO). Die Reaktion ergab eine trübe, viskose Flüssigkeit.

Es wurden die folgende Edukt-Mischung verwendet:

| | g | Mol |
|---|---|---|
| Adipinsäure-Butylenglykol Polyester (Mw 3043) | 150,46 g | 0,0494 |
| Adipinsäure-Butylenglykol Polyester (Mw 2015) | 4,74 g | 0,0024 |
| Sulfoniertes Diol (Mw 430) | 8,32 g | 0,0193 |
| EO-PO-EO Block Copolymer (Tergitol L61 PU von Dow, Mw 2000, EO/PO = ca. 1/9) | 8,64 g | 0,0042 |
| Glycerolallylether (GAE, Mw 132,2) | 2,00 | 0,0151 |
| Isophorondiisocyanat (IPDI) (Mw 222,3) | 28,32 g | 0,1274 |
| Fomrez UL-28 (DBTL) in Aceton (50 Gew.-%) | 0,04 g | |

### Herstellung der Miniemulsionen:

Die Miniemulsionen wurden hergestellt, indem die Wasserphase bei 40°C vorgelegt wurde. Unter Rühren mit einem Ultra-Turrax-Stab (3 min bei 13k U/min) wurde die warme Harzphase zugegeben um eine Prä-Emulsion zu erzeugen. Anschließend erfolgte die Miniemulgierung mit einem Hochdruckhomogenisator von Microfluidics (4 Durchläufe) bei 11,000 psi. Dann erfolgte die Zugabe von Piperazinlösung und Rühren für 5 Minuten, die Dispersion wurde dann für weitere 5 Minuten bei Raumtemperatur unter Stickstoff gerührt (300 U/min), dann auf 65°C erhitzt und die beiden Initiatoren parallel zugetropft. Danach wurde noch für 1 h bei 70°C gerührt.

| | | Dispersion A | Dispersion B | Dispersion C | Dispersion D |
|---|---|---|---|---|---|
| Wasserphase | Demineralisiertes Wasser | 112,5 g | 112,5 g | 112,5 g | 60,0 g |
| Harzphase | s.o. Tabelle 1 | 33,0 g | 33,0 g | 33,0 g | 33,0 g |
| | +MMA/LMA/TPGDA/AMEO | | | | |
| | Glycidylmethacrylat | - | 3,0 g | - | - |
| | Methacryltriethoxysilan | - | - | 3,0 g | - |
| | AMEO | - | - | - | 0,1 g |
| Kettenverlängerer | Piperazinhexahydrat (20%ig, Mw 194,2) | 4,1 g | 4,1 g | 4,1 g | - |
| Initiator 1 | FF6M/H₂O | 0,05/6,0 g | 0,05/6,0 g | 0,05/6,0 g | 0,05/6,0 g |
| Initiator 2 | TBHP(70%ig)/H₂O | 0,15/6,0 g | 0,15/6,0 g | 0,15/6,0 g | 0,15/6,0 g |
| Summe | | 161,8 g | 164,8 g | 164,8 g | 99,3 g |
| Bemerkungen | | Homogen | Homogen | Homogen | Homogen |
| Teilchengröße | Mittlerer Teilchendurchmesser | 271 nm | 242 nm | 208 nm | 306 nm |
| | Standardabweichung | 0,2 | 0,29 | 0,32 | 0,48 |
| Koagulat | | Gering | Gering | Gering | Gering |
| | | | | | |
| AS pr./th. (%) | | 16,2/20,9 | 20,7/22,4 | 14,2/22,4 | 29,1/33,4 |

## Patentansprüche

1. Verfahren zur Herstellung einer wässrigen Polyurethan-Silan-Hybrid-Dispersion, **dadurch gekennzeichnet, dass** das Verfahren umfasst:
(i) Herstellen eines Vinyl-funktionalisierten Polyurethan-Präpolymers durch Umsetzen von Polyolen und mindestens einem organischen Polyisocyanat, vorzugsweise in Gegenwart eines geeigneten Katalysators, wobei die Polyole umfassen:
(A) mindestens ein Polyol, vorzugsweise ein Polyetherpoyol, das mindestens eine ionische oder potentiell ionische hydrophile Gruppe aufweist;
(B) mindestens ein nichtionisches Polyol, insbesondere ein nichtionisches hydrophiles Polyetherpolyol; und
(C) mindestens ein Vinyl-funktionalisiertes Polyol, insbesondere ein Allyl-funktionalisiertes Polyol;
wobei die Polyole in Form einer Polyolmischung umfassend die Polyole (A)-(C) mit dem mindestens einen organischen Polyisocyanat umgesetzt werden, wobei das mindestens eine organische Polyisocyanat in einem molaren Überschuss bezogen auf die Hydroxylgruppen der Polyole eingesetzt wird, um ein NCO-terminiertes Vinyl-funktionalisiertes Polyurethan-Präpolymer zu erhalten;
(ii) Mischen des Polyurethan-Präpolymers aus Schritt (i) mit mindestens einem Vinylgruppen-haltigen Silan um eine Polyurethan-Präpolymer/Silan-Mischung zu ergeben;
(iii) Dispergieren der homogenen Polyurethan-Präpolymer/Silan-Mischung in eine kontinuierliche wässrige Phase derart, dass eine stabile Miniemulsion der Polyurethan-Präpolymer/Silan-Mischung in der wässrigen Phase gebildet wird; und
(iv) Polymerisieren der Vinylgruppen-haltigen Silane und der Vinylgruppen des Polyurethan-Präpolymers, um die wässrige Polyurethan-Silan-Hybrid-Dispersion zu ergeben.

2. Das Verfahren nach Anspruch 1, **dadurch gekennzeichnet, dass** in Schritt (ii) das Polyurethan-Präpolymer mit mindestens einem Vinylgruppen-haltige Silan und mindestens einem Vinylmonomer gemischt wird, um eine, vorzugsweise homogene, Polyurethan-Präpolymer/Silan/Vinylmonomer-Mischung zu ergeben.

3. Das Verfahren nach Anspruch 2, **dadurch gekennzeichnet, dass** das mindestens eine Vinylgruppen-haltige Silan und/oder das mindestens eine Vinylmonomer eine Vinylgruppe aufweist, die bezogen auf den Q-Wert mindestens zweifach reaktiver ist, als die Vinylgruppe des mindestens einen Vinyl-funktionalisierten Polyols (C).

4. Das Verfahren nach Anspruch 3, **dadurch gekennzeichnet, dass**
(a) der Q-Wert des mindestens einen Vinylgruppen-haltigen Silans und/oder des mindestens einen Vinylmonomers 0,1 oder mehr beträgt und der Q-Wert des mindestens einen Vinyl-funktionalisierten Polyols 0,01 oder weniger beträgt; und/oder
(b) der e-Wert des mindestens einen Vinylgruppen-haltigen Silans und/oder des mindestens einen Vinylmonomers 0,2 oder mehr beträgt und der e-Wert des mindestens einen Vinyl-funktionalisierten Polyols -0,6 oder weniger beträgt; und/oder
(c) die Vinylgruppe des mindestens einen Vinylgruppen-haltigen Silans und/oder des mindestens einen Vinylmonomers eine Acryl- oder Methacrylgruppe und die Vinylgruppe des mindestens einen Vinyl-funktionalisierten Polyols eine Allylgruppe, insbesondere eine Allylethergruppe ist; und/oder
(d) das mindestens eine Vinylmonomer ein Vinylmonomer umfasst, dessen Homopolymere eine Glasübergangstemperatur T_{g} von kleiner 0°C, vorzugsweise kleiner -30°C, besonders bevorzugt kleiner -50°C aufweisen;
(e) das mindestens eine Vinylmonomer ein Acrylat- oder Methacrylatmonomer ist; und/oder
(f) das mindestens eine Vinylgruppen-haltige Silan ein (Meth)Acrylat-funktionalisiertes Trialkoxysilan ist.

5. Das Verfahren nach Anspruch 1 oder 2, wobei die Polyole ferner mindestens ein Polyesterpolyol, das einen Schmelzpunkt Tₘ von größer 0°C, vorzugsweise größer 40 °C, besitzt, umfassen.

6. Das Verfahren nach mindestens einem der Ansprüche 1 bis 3, **dadurch gekennzeichnet, dass** die Polyole jeweils bezogen auf das Gesamtgewicht der Polyole umfassen:
(a) 0,1-10 Gew.-%, insbesondere 1-6 Gew.-%, des mindestens einen Polyols, vorzugsweise Polyetherpoyols, das mindestens eine ionische oder potentiell ionische hydrophile Gruppe aufweist;
(b) 0,5-15 Gew.-%, insbesondere 3-10 Gew.-%, des mindestens einen nichtionischen Polyols, vorzugsweise nichtionischen hydrophilen Polyetherpolyols;
(c) 0,1 bis 10 Gew.-%, insbesondere 0,5-3 Gew.-%, des mindestens einen Vinyl-funktionalisierten Polyols; und
(d) optional 40-95 Gew.-%, insbesondere 60-85 Gew.-%, des mindestens einen Polyesterpolyols, das einen Schmelzpunkt Tₘ von größer 0°C, vorzugsweise größer 40°C besitzt;
wobei die Mengen der Polyole (a)-(d) zusammen vorzugsweise 100 Gew.-% ergeben.

7. Das Verfahren nach mindestens einem der Ansprüche 1 bis 5, **dadurch gekennzeichnet, dass** das mindestens eine Polyol, das mindestens eine ionische oder potentiell ionische hydrophile Gruppe aufweist
(a) ein Polyol, insbesondere ein Polyetherpolyol, ist, das mindestens eine, vorzugsweise genau eine, anionische oder potentiell anionische hydrophile Gruppe aufweist; und/oder
(b) eine ionische Gruppe aufweist, die ausgewählt wird aus der Gruppe bestehend aus Sulfat-, Sulfonat-, Phosphat-, Phosphonat-, Carboxylat-, und Ammonium-Gruppen, sowie ionischen Heterozyklen, insbesondere stickstoffhaltigen, 5-6-gliedrigen Heterozyklen; und/oder
(c) eine potentiell ionische Gruppe aufweist, die ausgewählt wird aus der Gruppe bestehend aus Carbonsäure- und Amino-Gruppen sowie ungeladenen Heterozyklen, insbesondere stickstoffhaltigen, 5-6-gliedrigen Heterozyklen; und/oder
(d) ein alkoxyliertes, insbesondere propoxyliertes, Addukt von einem Alkendiol, insbesondere 2-Buten-1,4-diol, und einem Sulfit, insbesondere einem Hydrogensulfit, ist; und/oder
(e) ein mittleres Molekulargewicht im Bereich von 200 bis 1000, vorzugsweise 300 bis 500 g/mol aufweist.

8. Das Verfahren nach mindestens einem der Ansprüche 1 bis 6, **dadurch gekennzeichnet, dass** das mindestens eine nichtionische Polyol ein nichtionisches Polyetherpolyol umfasst, insbesondere ein Polyalkylenglykol Homo- oder Copolymer, wobei das Polyalkylenglykol Homo- oder Copolymer vorzugsweise
(a) ein Polypropylenglykol Homo- oder Copolymer umfasst, insbesondere ein Polypropylenglykol Homopolymer oder ein Polypropylenglykol/Polyethylenglykol (Block)-Copolymer, vorzugsweise mit einem Ethylenoxidgehalt von 45 mol% oder weniger, noch bevorzugter 10 % oder weniger;
(b) mindestens ein Polyethylenglykol Homo- oder Copolymer umfasst, insbesondere ein Polyethylenglykol Homopolymer oder ein Polypropylenglykol/Polyethylenglykol (Block)-Copolymer, vorzugsweise mit einem Ethylenoxidgehalt von 10 mol% oder mehr, noch bevorzugter 45 % oder mehr; und/oder
(c) eine Mischung aus den Polymeren gemäß (i) und (ii) umfasst;
(d) ein mittleres Molekulargewicht im Bereich von 1000 bis 4000, vorzugsweise 1500 bis 2500 g/mol aufweist.

9. Das Verfahren nach mindestens einem der Ansprüche 1 bis 6, **dadurch gekennzeichnet, dass** das mindestens eine Vinyl-funktionalisierte Polyol
(a) ein Vinylgruppen-enthaltendes Diol ist;
(b) ein Allyl-funktionalisiertes Polyol, insbesondere ein Polyol-Allylether ist, wobei der Polyol-Allylether für die Herstellung des Vinyl-terminiertes Polyurethan-Präpolymers vorzugsweise ausgewählt wird aus Monoethern von Allylalkohol mit einem Diol, insbesondere Ethandiol, 1,2-Propandiol, 1,3-Propandiol, 1,4-Butandiol, 1,6-Hexandiol, und Mischungen davon, und der Polyol-Allylether für die Herstellung des NCOterminierten, Vinyl-funktionalisierten Polyurethan-Präpolymers vorzugsweise ausgewählt wird aus Monoethern von Allylalkohol mit einem Triol oder Polyol mit mehr als drei Hydroxylgruppen, insbesondere Glycerin,
(c) ein monomeres Polyol ist; und/oder
(d) ein mittleres Molekulargewicht im Bereich von 100 bis 400 g/mol aufweist.

10. Das Verfahren nach mindestens einem der vorangehenden Ansprüche, **dadurch gekennzeichnet, dass** das Polyurethan-Präpolymer 5 Gew.-% oder weniger an Ethylenoxid-Einheiten enthält.

11. Das Verfahren nach mindestens einem der vorangehenden Ansprüche, **dadurch gekennzeichnet, dass** das organische Polyisocyanat ein Diisocyanat ist, insbesondere ausgewählt aus der Gruppe bestehend aus aromatischen Diisocyanaten, vorzugsweise Diphenylmethandiisocyanat (MDI), polymerem MDI und/oder Toluoldiisocyanat (TDI), und aliphatischen Diisocyanaten, vorzugsweise Hexamethylendiisocyanat (HDI), Isophorondiisocyanat (IPDI) und/oder Methylen-4,4-bis(cyclohexyl)diisocyanat (H12MDI), oder Mischungen davon.

12. Das Verfahren nach mindestens einem der vorangehenden Ansprüche, **dadurch gekennzeichnet, dass** Schritt (iii) umfasst:
(a) Emulgieren der Polyurethan-Präpolymer/Silan-Mischung oder der Polyurethan-Präpolymer/Silan/Vinylmonomer-Mischung in eine kontinuierliche wässrige Phase, insbesondere Wasser, um eine Präemulsion zu bilden; und
(b) Homogenisieren der Präemulsion um eine stabile Miniemulsion zu bilden.

13. Das Verfahren nach mindestens einem der vorangehenden Ansprüche, **dadurch gekennzeichnet, dass** der Dispergierschritt (iii), insbesondere der Homogenisierungsschritt, mittels eines Hochscherverfahrens erfolgt, insbesondere mittels eines Hochscherverfahrens mit (a) Scherraten von mindestens 1.000.000/s, und/oder (b) einem Energieeintrag pro Zeit von mindestens 10⁶J/s*m³.

14. Das Verfahren nach mindestens einem der vorangehenden Ansprüche, **dadurch gekennzeichnet, dass** das NCO-terminierte, Vinyl-funktionalisierte Polyurethan-Präpolymer umgesetzt wird mit
(a) einem geeigneten Kettenverlängerer; und/oder
(b) einem mit mindestens einer NCO-reaktiven Gruppe, vorzugsweise einer Hydroxyl- oder Aminogruppe, funktionalisiertem Silan, insbesondere einem Aminosilan; und/oder
(c) Wasser.

15. Wässrige Polyurethan-Silan-Hybrid-Dispersion erhältlich nach dem Verfahren gemäß mindestens einem der Ansprüche 1 bis 14.
